(19) Europäisches Patentamt
European Patent Office
Office européen des brevets

(11) Publication number: 0 044 673
B1

# (12) EUROPEAN PATENT SPECIFICATION

(45) Date of publication of the patent specification: **18.04.84**

(51) Int. Cl.[3]: **C 09 D 3/82,** C 08 L 83/04

(21) Application number: **81303139.0**

(22) Date of filing: **09.07.81**

## (54) Primer compositions containing phenylsiloxane resin.

(30) Priority: **11.07.80 JP 95497/80**

(43) Date of publication of application: **27.01.82 Bulletin 82/4**

(45) Publication of the grant of the patent: **18.04.84 Bulletin 84/16**

(84) Designated Contracting States: **BE DE FR GB IT NL SE**

(56) References cited:
**DE - A - 2 335 569**
**FR - A - 2 338 305**
**US - A - 3 455 762**
**US - A - 3 769 253**
**US - A - 3 873 334**

(73) Proprietor: **Toray Silicone Company Limited, 2-8 Nihonbashi Muromachi, Chuo-ku Tokyo 103 (JP)**

(72) Inventor: **Nakasuji, Kasuyoshi, 1-6 Yushudai-Nishi, Ichihara-shi Chiba-ken (JP)**
Inventor: **Kageyama, Katsuaki, 1-6 Yushudai-Nishi, Ichihara-shi Chiba-ken (JP)**

(74) Representative: **Lewin, John Harvey et al, Elkington and Fife High Holborn House 52/54 High Holborn, London WC1V 6SH (GB)**

**EP 0 044 673 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

Primer Compositions Containing Phenylsiloxane Resin

## *Background of the Invention*

### *Field of the Invention*

This invention relates to primer compositions and a method of adhering silicone rubber to substrates using the primer composition. In more detail, this invention relates to primer compositions which are suitable for adhering silicone rubbers which cure by heat to various surfaces, for example, metal surfaces, and which will provide superior adhesion durability at high temperatures, about 200°C, and in various atmospheres such as in air, steam, and oil.

### *Description of the Prior Art*

In recent years, because of its superior thermal resistance, silicone rubber has been widely utilized where rubber-type elasticity was needed at high temperatures. When these silicone rubbers are used in a high-temperature atmosphere, they are frequently used as composites adhering to various substrates, especially metals such as iron, aluminum, and stainless steel. It is not infrequent that they are exposed to heat-resistant lubrication oils, for example, silicone oil, or to steam. In these cases, the silicone rubber bond deteriorates and separates from the surface of the substrate before it loses its rubber elasticity. Hence, it was hoped that there would emerge a primer which would maintain strong adhesive strength for long periods of time even under severe conditions.

With the purpose of improving the adhesion strength under such adverse conditions, various primer compositions have been suggested. For example, compositions whose components are silicone gum, vinyl-containing silicone oil, vinylalkoxyl silane, and phosphoric acid as described in Japanese Patent No. Sho 52(1977)-32767; compositions whose components are silicone gum, vinyl-containing silicone oil, polybasic allyl ester, and fatty acid salts of metals as described in Japanese Kokai Patent No. Sho 52(1977)-26535; and compositions whose components are acryloxypropylalkoxysilane and fatty acid salts of iron as described in Japanese Patent No. Sho 55(1980)-16050 can be listed. These primer compositions deteriorate in adhesion strength when exposed to severe conditions of high temperature for long periods of time; they were not fully satisfactory.

In Japanese Kokai Patent No. Sho 55(1980)-66951, published May 20, 1980 a primer composition is described, which can be used under severe conditions of high temperature in air or oil. The primer composition is described as containing organopolysiloxanes, with a viscosity greater than 0.01 $m^2/s$, a vinyl-containing organopolysiloxane with a viscosity of 0.000005 to 0.01 $m^2/s$, $R^8Si(OR^9)3$ where $R^8$ is a monovalent unsaturated hydrocarbon radical, $R^9$ is methyl, ethyl, 2-methoxyethyl or 2-ethoxyethyl, and a curing catalyst. Optionally, the composition can contain an organopolysiloxane resin, a silica filler, and an organic peroxide.

In order to improve the above-mentioned negative point, extensive research was carried out, leading to this invention. It has been discovered that when a phenyl-containing organopolysiloxane resin was used as one component of the membrane-forming composition, superior thermal resistance was obtained. The surprising and unexpected superior thermal resistance was achieved without the use of polymers as described. Therefore, this composition provides an adhesion-covering composition which maintains strong adhesion strength to metal surfaces even in high-temperature atmospheres. This also provides a primer composition which maintains strong adhesion strength for long periods of time under adverse conditions.

## *Summary of the Invention*

This invention relates to a primer composition consisting essentially of

(*A*) 100 parts by weight of an organopolysiloxane resin having an average unit formula—

$$R_a(R'O)_bSiO_{\frac{4-a-b}{2}}$$

in which R is a monovalent alkyl, halogenated alkyl, vinyl, allyl, cyanoalkyl, and phenyl radical, where at least 5% of the R radicals are phenyl, R' is a hydrogen atom and an alkyl radical, a has a value of from 0.90 to 1.8, and b has a value such that the amount of R'O is greater than 0.01% by weight and up to 20% by weight based on the weight of the resin,

(*B*) 20 to 400 parts by weight of a trialkoxysilane of the general formula—

$$R^2Si(OR^3)_3$$

or its partial hydrolysis condensation product, in which $R^2$ is a monovalent unsaturated aliphatic vinyl, allyl, and acryloxyalkyl radical, and $R^3$ is an alkyl radical of 1 to 10 carbon atoms,

(*C*) 2 to 100 parts by weight of an organic titanate, and

(*D*) an organic solvent.

This invention also relates to a method of adhering silicone rubber to a substrate comprising coating the substrate with the primer composition of this invention, removing the organic solvent to at least form a semisolid, forming a primed substrate surface, thereafter applying to the primed substrate surface a composition which cures to a silicone rubber by heating to form a composite, and heating the composite to cure the composition to form a silicone rubber adhered to the substrate through the primer having an adhesion strength resistant to decreasing when exposed to high-temperature silicone oil.

## *Detailed Description of the Invention*

The organopolysiloxane resin of (*A*) has monovalent hydrocarbon radicals, halogenated monovalent hydrocarbon radicals, or cyanoalkyl radicals. R in the formula can be an alkyl radical such as methyl, ethyl, propyl, and octadecyl; vinyl and allyl; phenyl; a halogenated alkyl radical; and cyanoalkyl radical. It is necessary that at least 5% of the R radicals be phenyl radical directly bound with a silicon atom. This is because the modulus of the membrane increases when less than 5% phenyl is used, and the heat resistance decreases and a membrane with sufficient durability cannot be obtained. Also, when an organic titanate such as tetra-n-butyl titanate, in component (*C*) is mixed in, gelation occurs and the primer composition cannot be obtained in a liquid state. Preferably, the amount of phenyl should be 10 to 70%. Also R' is a hydrogen atom or an alkyl radical such as methyl, ethyl, propyl, and dodecyl. The value of a is limited to 0.90-1.80, and b exhibits a value such that the amount of the R'O, the hydroxyl and the alkoxyl is greater than 0.01% by weight and up to 20% by weight based on the weight of the organopolysiloxane resin.

Such an organopolysiloxane resin of (*A*) having hydroxyl or alkoxyl is the main component of this invention. The method for its synthesis is well known. That is to say, this can be synthesized, for example, by carrying out hydrolysis of one chlorosilane or alkoxysilanes which have 0.90-1.80 R per silicon atom, in the presence of water or a mixture of water and an organic solvent. With this invention, not only the organopolysiloxane resin obtained directly through hydrolysis, but also the organopolysiloxane resin further treated by a heat treatment and polycondensed can be used. Also an organopolysiloxane resin can be used where both hydroxyl and alkoxyl coexist.

The (*B*) component is necessary for the composition of this invention to have its adhesion property. $R^2$ in the above formula is a monovalent aliphatic unsaturated hydrocarbon radical, i.e. vinyl or allyl, or an acryloxyalkyl radical, and $R^3$ is an alkyl radical having from 1 to 10 carbon atoms such as methyl, ethyl, n-propyl, isopropyl, and decyl. Of the trialkoxysilanes, the following two are preferable: (1) trialkoxysilane with a general formula as follows—

$$H_2C=CH-(CH_2)_c-Si(OR^3)_3$$

in which c is 0 or 1, and $R^3$ is as described before, and (2) trialkoxysilane with a general formula as follows—

$$H_2C=\overset{\displaystyle R^5}{\overset{|}{C}}-\overset{\displaystyle O}{\overset{\|}{C}}-O-R^6-Si(OR^3)_3$$

in which $R^5$ is hydrogen atom or methyl radical, $R^6$ is an alkylene radical such as a methylene, ethylene, propylene; and $R^3$ is as described before. For these trialkoxysilanes, the following can be listed: vinyltrimethoxysilane, vinyltriethoxysilane, vinyltris-(β-methoxyethoxy)silane, γ-(methacryloxy)-propyltrimethoxysilane, γ-(methacryloxy)propyltriethoxysilane, allyltrimethoxysilane, and allyltriethoxysilane. These trialkoxysilanes and their partial hydrolysis condensation product can be used. The mixing proportion of these should be 20 to 400 parts by weight to 100 parts by weight of the (*A*) component, preferably 25 to 350 parts by weight.

The (*C*) component is an organic titanate or its polycondensation product. This not only hardens the primer compositions of this invention and gives them an air-drying property as a catalyst, but also is a component which raises the adhesion strength, and especially raises the heat resistance greatly. (*C*) can be a tetraalkyl titanate such as tetraisopropyl titanate, tetra-n-butyl titanate, butyl titanate dimer of the formula $(C_4H_9O)_3TiO-Ti(OC_4H_9)_3$, a tetra-(2-ethylhexyl) titanate and their polycondensation products. Also, in this invention, titanium chelate compounds such as titanium acetyl acetonate of the formula $(C_3H_7O)_2Ti(C_6H_7O_2)_2$, polytitanium acetyl acetonate, titanium octyl glycolate of the formula $(C_4H_9O)_2Ti(C_8H_{16}O_2)_2$, titanium lactate of the formula $(HO)_2Ti(C_3H_5O_3)_2$, titanium lactate ethyl ester of the formula $(C_3H_7O)_2Ti(C_5H_9O_3)_2$, titanium triethanol aminate of the formula $(C_6H_{13}O_3N)_2Ti$ can be used alone or together as the need arises. The amount of this (*C*) component is 2 to 100 parts by weight to 100 parts by weight (*A*) component.

The (*D*) component is an organic solvent which dissolves the primer composition of the invention. The organic solvent selected by keeping in mind its dissolvability and the evaporating property in the primer application operation. For example, toluene, xylene, benzene, heptane, nexane, trichloroethylene, perchloroethylene, methylene chloride, ethanol, isopropanol, butanol, can be used. One solvent can be used alone, or two or more solvents can be used together as a mixed solvent. It is advantageous to dissolve the composition of this invention to a viscosity suitable to the actual primer application operation, so the usage amount is not especially limited.

The (*E*) component is a tetraalkoxysilane, expressed by the general formula $Si(OR^4)_4$ where $R^4$ is a $C_1$ to $C_4$ alkyl radical, i.e. methyl, ethyl, propyl, butyl, or its partial hydrolysis condensation product. The tetraalkoxysilane is effectively added to the primer composition for the purposes of improving the air-drying property of the composition of the invention and raising the adhesion strength between the substrate and the primer membrane. The tetraalkoxysilanes can be, for example: tetramethoxysilane, tetraethoxysilane, and tetrabutoxysilane. When using these tetraalkoxysilanes or their partial hydrolysis condensation products, it is preferable to use 20 to 200 parts by weight to 100 parts by weight of (*A*) component, preferably 20 to 100 parts by weight.

The composition of this invention can be easily obtained by simply combining the components (*A*) through (*D*), or (*A*) through (*E*), to make a uniform mixture. However, in order to further improve the strength of the membrane after hardening, various inorganic fillers, for example, finely powdered silica, can be added. In this case, it is suitable to use, as the bulking agent, silica filler

which has surface treatment. Also, commonly known heat-resistant agents such as red iron oxide, cerium oxide, cerium hydroxide, fatty acid salt of cerium, fatty acid salt of iron, titanium oxide, and carbon black, as well as coloring agents and other additives can be added as long as the properties of this invention are not lost.

The primer compositions of this invention are coated on a substrate. After the substrate is coated, the organic solvent is removed. One convenient method of organic solvent removal is to let the coating air-dry. The length of time for a specific primer composition to air-dry will vary with the kind of solvent used, the solvent content, the kind of catalyst, and the kind of alkoxyl radical. However, the air-drying time should be sufficient to at least form a semisolid from the primer composition. For best results, the air-drying time should be at least 30 min. Heating can also be used to reach the semisolid state.

After the organic solvent has been removed from the primer composition, a silicone rubber composition which cures by heating can be applied over the primed substrate surface to form a composite. The composite is then heated to cure the silicone rubber composition resulting in a silicone rubber adhered to the substrate through a primer.

The primer composition of this invention can be used to firmly adhere silicone rubber to the surface of various substrates, such as metals, for example, iron, aluminum, nickel, chrome, zinc, and steel, their alloys, and synthetic resin materials, for example, acrylic resin, phenol resin, and epoxy resin. Furthermore, this primer shows superior behavior in that the adhesion strength does not diminish even when exposed to high-temperature oil such as silicone oil and steam. Because of this characteristic, the primer composition can be used effectively to adhere silicone rubber in an oil-seal housing, to adhere silicone rubber to the metal shafts of the rollers in duplicating machines, to adhere silicone rubber to the metal shafts of engine mounts, and to adhere silicone rubber to various other metals.

Preferred primer compositions of this invention are those which consist essentially of (*A*) 100 parts by weight organopolysiloxane resin having at least 5% of the R being phenyl and the remainder being methyl, a is 1.1 to 1.6, and b has a value such that the amount of R'O is from 1 to 10% by weight based on the weight of the resin, and R' is hydrogen, (*B*) 25 to 350 parts by weight of trialkoxysilane in which $R^3$ is an alkyl radical of 1 to 3 carbon atoms and $R^2$ is an acryloxyalkyl radical in which $R^5$ is hydrogen atom or methyl, and $R^6$ is a divalent hydrocarbon radical.

Primer compositions which have been found to provide particularly good results are those defined as preferred where the organopolysiloxane resin contains 10 to 70% phenyl as R and the remainder of R being methyl, and b has a value such that the amount of R'O is from 1 to 5% by weight based on the weight of the resin, (*B*) is 150 to 250 parts by weight of γ-(methacryloxy)propyltrimethoxysilane, (*C*) is 5 to 50 parts by weight of a tetraalkyl titanate and the organic solvent, (*D*) is present in an amount of 200 to 600 parts by weight. These primer compositions can optionally contain 20 to 100 parts by weight of a tetraalkoxysilane in which $R^4$ is an alkyl radical of one to three carbon atoms. Other primer compositions which provide good results are those defined here and contain organopolysiloxane resin in which R' is methyl rather than hydrogen.

The following examples are presented for illustrative purposes only and should not be construed as limiting the invention which is properly delineated in the claims. In the examples, parts are parts by weight, percent is percent by weight, Me denotes methyl, and Ph denotes phenyl.

*Example 1:*

A primer composition of uniform dispersion liquid was obtained by combining and mixing 100 parts of methylphenylpolysiloxane resin containing 3% hydroxyl radical and composed of 20 mol-% $MeSiO_{3/2}$ units, 40 mol-% $PhSiO_{3/2}$ units, 20 mol-% $Me_2SiO$ units, and 20 mol-% $Ph_2SiO$; 200 parts of vinyltrimethoxysilane; 10 parts of tetra-n-butyl titanate; and 430 parts of toluene.

This primer composition was applied to three kinds of metals, namely iron, aluminum, and stainless steel, 6 plates each, which were air-dried for 30 min at room temperature forming a primed surface. Next, a 4 mm thick uncured silicone rubber molding composition (SH52U sold by Toray Silicone K.K., Tokyo, Japan), containing 5% of 2,5-dimethyl-2,5-di-(t-butylperoxyl)hexane added as a vulcanizing agent was applied to the above-mentioned primed surface, pressure of 200 kg/cm² was applied, and this assembly was heated for 10 min at 170°C, and the silicone rubber was cured. Testing plates where the silicone rubber and the metal plate were firmly adhered were obtained.

These testing plates were divided into two groups. One group was placed in polydimethylsiloxane oil having a viscosity of 0.0001 m²/s at 25°C (SH200 sold by Toray Silicone K.K., Tokyo, Japan) whose temperature was maintained at 200°C. The test plates were left standing in the oil and taken out for observation after 1, 10, and 20 d. In all cases, separation between the metal and the silicone rubber was not observed. The other group of test plates were placed in a heated oven whose temperature was maintained at 230°C. These test plates were taken out for observation after 1, 10, and 20 d. In all cases, separation between the metal and silicone rubber was not observed.

For comparison, the same test was carried out as mentioned above using the primer composition obtained, except that a methylphenylpolysiloxane component was not mixed in the above-mentioned composition. For both plate groups, after 1 d, the silicone rubber and the metal were already separated.

*Example 2:*

Six different kinds of primer compositions as

shown in Table I were made up by adding vinyltrimethoxysilane, γ-(methacryloxy)propyltrimethoxysilane, tetrapropoxysilane, and tetra-n-butyl titanate in various proportions to the same methylphenylpolysiloxane resin as was used in Example 1. Other components not listed above were used in the same proportion as in Example 1. These primer compositions and the silicone rubber composition as used in Example 1 were adhered to iron and aluminum test plates under the same reaction conditions as in Example 1. These plates were placed in polydimethylsiloxane oil as defined in Example 1 which was maintained at 200°C. The test plates were left standing in the oil and taken out to observe the adhesion condition after 1, 10, and 20 d. The results are indicated in Table II. The iron and aluminum test plates had the same results and therefore only one result is shown in Table II. For comparison, results on tests carried out on primer compositions obtained as before except for not mixing in the methylphenylpolysiloxane resin component of the above-mentioned composition in one case, and not mixing in the tetra-n-butyl titanate in the other case, and not mixing in the tetra-n-butyl titanate in the other case, are shown in Table II. Comparison composition G did not contain a trialkoxysilane, and showed some gelling upon preparation, but test plates could be made.

*Example 3:*

The following ingredients were added together and mixed well: 100 parts of methylphenylpolysiloxane resin containing 3% methoxy radical and composed of 15 mol-% $MeSiO_{3/2}$ units, 35 mol-% $PhSiO_{3/2}$ units, 40 mol-% $Me_2SiO$ units, and 10 mol-% $Ph_2SiO$ units; 280 parts toluene. Next, 200 parts γ-(methacryloxy)propyltrimethoxysilane and 10 parts tetra-n-butyl titanate were added and mixed, and a primer composition was obtained as a uniform dispersion liquid.

This composition was applied to iron and aluminum test plates and was air-dried by standing for 60 min. To the test plates, using the same silicone rubber composition as used in Example 1, and under the same reaction conditions as in Example 1, iron and aluminum test plates were prepared as described in Example 1. These test plates were placed into polydimethylsiloxane oil as described in Example 1, which was maintained at 200°C and were left standing. After 1, 10, and 20 d, they were taken out to be observed. None of the test plates showed any separation.

*Table I*

| | This invention | | | | Comparison Example | | |
|---|---|---|---|---|---|---|---|
| | A | B | C | D | E | F | G |
| Phenylmethylpolysiloxane resin | 100 | 100 | 100 | 100 | — | 100 | 100 |
| Vinyltrimethoxysilane | 180 | — | — | — | — | — | — |
| γ-(Methacryloxy)propyltrimethoxysilane | — | 180 | 180 | 100 | 100 | 180 | — |
| Tetrapropoxysilane | — | — | — | 80 | — | — | — |
| Tetra-n-butyl titanate | 30 | 30 | 10 | 10 | 10 | — | 10 |

*Table II*

| Primer | This invention | | | | Comparison Example | | |
|---|---|---|---|---|---|---|---|
| Silicone Oil Immersion Test (200°C) (d) | A | B | C | D | E | F | G |
| 1 | O | O | O | O | X | P | X |
| 10 | O | O | O | O | X | X | X |
| 20 | O | O | O | O | X | X | X |

O = Complete adhesion
X = Entire separation of silicone rubber from substrate
P = Partial separation of silicone rubber from substrate

## Claims

1. A primer composition consisting essentially of

(*A*) 100 parts by weight of an organopolysiloxane resin having an average unit formula—

$$R_a(R'O)_bSiO_{\frac{4-a-b}{2}}$$

in which R is a monovalent alkyl, halogenated alkyl, vinyl, allyl, cyanoalkyl, and phenyl radical, where at least 5% of the R radicals are phenyl, R' is a hydrogen atom and an alkyl radical, a has a value of from 0.90 to 1.8 and b has a value such that the amount of R'O is greater than 0.01% by weight and up to 20% by weight based on the weight of the resin,

(*B*) 20 to 400 parts by weight of a trialkoxysilane of the general formula—

$$R^2Si(OR^3)_3$$

or its partial hydrolysis condensation product, in which $R^2$ is a monovalent unsaturated aliphatic

vinyl, allyl, and acryloxyalkyl radical, and $R^3$ is an alkyl radical of 1 to 10 carbon atoms,

(*C*) 2 to 100 parts by weight of an organic titanate, and

(*D*) an organic solvent.

2. A primer composition according to Claim 1, in which there is also present an ingredient

(*E*) 20 to 200 parts by weight of a tetraalkoxysilane of the general formula–

$$Si(OR^4)_4$$

or its partial hydrolysis condensation product, in which $R^4$ is a $C_1$ to $C_4$ alkyl radical.

3. A primer composition according to Claim 1 or 2, in which $R^2$ is an acryloxyalkyl of the general formula–

$$CH_2=\overset{R^5}{\overset{|}{C}}-\overset{O}{\overset{\|}{C}}-O-R^6-$$

in which $R^5$ is a hydrogen atom or methyl radical, and $R^6$ is an alkylene radical.

4. A primer composition according to Claim 3, in which $R^3$ is methyl, $R^5$ methyl, and $R^6$ propylene.

5. A primer composition according to any one of Claims 1 to 4, in which the organopolysiloxane resin of (*A*) has at least 5% of the R as phenyl and the remainder being methyl, a has a value from 1.1 to 1.6, R' is hydrogen, and b has a value such that the amount of R'O is from 1 to 10% by weight, (*B*) is 25 to 350 parts by weight of trialkoxysilane in which $R^3$ is an alkyl radical of 1 to 3 carbon atoms.

6. A primer composition according to Claim 5, in which the organopolysiloxane resin of (*A*) has from 10 to 70% of the R as phenyl and the remainder being methyl, and b has a value such that the amount of R'O is from 1 to 5% by weight, (*B*) is 150 to 250 parts by weight of trialkoxysilane in which $R^3$ is methyl, $R^5$ methyl, and $R^6$ propylene, (*C*) is 5 to 50 parts by weight of a tetraalkyl titanate, and the organic solvent of (*D*) is present in an amount of 200 to 600 parts by weight.

7. A primer composition according to Claim 6, in which the tetraalkyl titanate of (*C*) is tetrabutyl titanate and the organic solvent is toluene.

8. A primer composition according to Claim 5, in which there is also present as the ingredient (*E*) 20 to 100 parts by weight of a tetraalkoxysilane of the general formula–

$$Si(OR^4)_4$$

in which $R^4$ is an alkyl radical of 1 to 3 carbon atoms.

9. A method of adhering silicone rubber to a substrate comprising–

(i) coating the substrate with a primer composition consisting essentially of (*A*) 100 parts by weight of an organopolysiloxane resin having an average unit formula–

$$R_a(R'O)_bSiO_{\frac{4-a-b}{2}}$$

in which R is a monovalent alkyl, halogenated alkyl, vinyl, allyl, cyanoalkyl, and phenyl radical, where at least 5% of the R radicals are phenyl, R' is a hydrogen atom and an alkyl radical, a has a value of from 0.90 to 1.8, and b has a value such that the amount, of R'O is greater than 0.01% by weight and up to 20% by weight, (*B*) 20 to 400 parts by weight of a trialkoxysilane of the general formula–

$$R^2Si(OR^3)_3$$

or its partial hydrolysis condensation product, in which $R^2$ is a monovalent unsaturated aliphatic vinyl, allyl, and acryloxyalkyl radical, and $R^3$ is an alkyl radical of 1 to 10 carbon atoms, (*C*) 2 to 100 parts by weight of an organic titanate, and (*D*) an organic solvent,

(ii) removing the organic solvent to at least form a semisolid, forming a primed substrate surface, thereafter,

(iii) applying to the primed substrate surface a composition which cures to a silicone rubber by heating to form a composite, and

(iv) heating the composite to cure the composition to form a silicone rubber adhered to the substrate through the primer having an adhesion strength resistant to decreasing when exposed to high-temperature silicone oil.

## Patentansprüche

1. Grundierzusammensetzung, bestehend im wesentlichen aus:

A) 100 Gewichtsteilen eines Organopolysiloxanharzes mit der mittleren Einheitsformel:

$$R_a(R'O)_bSiO_{\frac{4-a-b}{2}}$$

in der R ein einwertiger Alkyl-, halogenierter Alkyl-, Vinyl-, Allyl-, Cyanalkyl- und Phenylrest ist, wobei mindestens 5% der R-Reste Phenylreste sind, R' ein Wasserstoffatom und ein Alkylrest ist, a einen Wert von 0,90 bis 1,8 hat und b einen solchen Wert hat, dass die Menge an R'O grösser als 0,01 Gew.-% und bis zu 20 Gew.-%, bezogen auf das Gewicht des Harzes, ist,

B) 20 bis 400 Gewichtsteilen eines Trialkoxysilans der allgemeinen Formel:

$$R^2Si(OR^3)_3$$

oder seines partiellen Hydrolysenkondensationsproduktes, wobei $R^2$ ein einwertiger ungesättigter aliphatischer Vinyl-, Allyl- und Acryloxyalkylrest ist und $R^3$ ein Alkylrest mit 1 bis 10 Kohlenstoffatomen ist,

C) 2 bis 100 Gewichtsteilen eines organischen Titanats, und

D) einem organischen Lösungsmittel.

2. Grundierzusammensetzung gemäss Anspruch 1, dadurch gekennzeichnet, dass sie ferner enthält als Bestandteil

E) 20 bis 200 Gewichtsteile eines Tetraalkoxysilans der allgemeinen Formel:

$$Si(OR^4)_4$$

oder seines partiellen Hydrolysenkondensationsproduktes, wobei $R^4$ ein $C_1$- bis $C_4$- Alkylrest ist.

3. Grundierzusammensetzung gemäss einem der Ansprüche 1 oder 2, dadurch gekennzeichnet, dass $R^2$ ein Acryloxyalkyl der allgemeinen Formel:

$$\begin{array}{l} \quad\;\; R^5\;\, O \\ \quad\;\;\; |\;\;\;\; \| \\ CH_2 = C - C - O - R^6 - \end{array}$$

ist, in der $R^5$ ein Wasserstoffatom oder ein Methylrest und $R^6$ ein Alkylenrest ist.

4. Grundierzusammensetzung gemäss Anspruch 3, dadurch gekennzeichnet, dass $R^3$ Methyl, $R^5$ Methyl und $R^6$ Propylen ist.

5. Grundierzusammensetzung gemäss einem der Ansprüche 1 bis 4, dadurch gekennzeichnet, dass in dem Organopolysiloxanharz (A) mindestens 5% des R Phenyl und der Rest Methyl ist, a einen Wert von 1,1 bis 1,6 hat, R' Wasserstoff ist und b einen solchen Wert hat, dass die Menge von R'O von 1 bis 10 Gew.-% beträgt, (B) 25 bis 350 Gewichtsteile Trialkoxysilan ist, wobei $R^3$ ein Alkylrest mit 1 bis 3 Kohlenstoffatomen ist.

6. Grundierzusammensetzung gemäss Anspruch 5, dadurch gekennzeichnet, dass in dem Organopolysiloxanharz (A) 10 bis 70% des R Phenyl und der Rest Methyl ist und b einen solchen Wert hat, dass die Menge von R'O von 1 bis 5 Gew.-% beträgt, (B) 150 bis 250 Gewichtsteile Trialkoxysilan ist, wobei $R^3$ Methyl, $R^5$ Methyl und $R^6$ Propylen ist, (C) 5 bis 50 Gewichtsteile Tetraalkyltitanat ist und das organische Lösungsmittel (D) in einer Menge von 200 bis 600 Gewichtsteilen vorhanden ist.

7. Grundierzusammensetzung gemäss Anspruch 6, dadurch gekennzeichnet, dass das Tetraalkyltitanat (C) Tetrabutyltitanat ist und das organische Lösungsmittel Toluol ist.

8. Grundierzusammensetzung gemäss Anspruch 5, dadurch gekennzeichnet, dass in ihr als Bestandteil (E) 20 bis 100 Gewichtsteile eines Tetraalkoxysilans der allgemeinen Formel:

$$Si(OR^4)_4$$

anwesend ist, wobei $R^4$ ein Alkylrest mit 1 bis 3 Kohlenstoffatomen ist.

9. Verfahren zum Verbinden eines Siliconkautschuks mit einem Substrat, gekennzeichnet durch

I) Überziehen des Substrats mit einer Grundierzusammensetzung, bestehend im wesentlichen aus (A) 100 Gewichtsteilen eines Organopolysilxanharzes mit der mittleren Einheitsformel:

$$R_a(R'O)_bSiO_{\frac{4-a-b}{2}}$$

in der R ein einwertiger Alkyl-, halogenierter Alkyl-, Vinyl-, Allyl-, Cyanalkyl- und Phenylrest ist, wobei mindestens 5% der R-Reste Phenyl sind, R' ein Wasserstoffatom und ein Alkylrest ist, a einen Wert von 0,90 bis 1,8 hat und b einen solchen Wert hat, dass die Menge an R'O grösser als 0,01 Gew.-% und bis zu 20 Gew.-% ist, (B) 20 bis 400 Gewichtsteilen eines Trialkoxysilans der allgemeinen Formel:

$$R^2Si(OR^3)_3$$

oder seines partiellen Hydrolysenkondensationsproduktes ist, wobei $R^2$ ein einwertiger ungesättigter aliphatischer Vinyl-, Allyl- und Acryloxyalkylrest ist und $R^3$ ein Alkylrest mit 1 bis 10 Kohlenstoffatomen ist, (C) 2 bis 100 Gewichtsteilen eines organischen Titanats, und (D) einem organischen Lösungsmittel,

II) Entfernen des organischen Lösungsmittels, um mindestens einen halbfesten Stoff zu bilden, der eine grundierte Substratoberfläche bildet, danach

III) auf die grundierte Substratoberfläche eine Zusammensetzung auftragen, die beim Erwärmen zu einem Siliconkautschuk härtet, um einen Verbundkörper zu bilden, und

IV) Erwärmen des Verbundkörpers, um die Zusammensetzung zu härten, so dass ein an das Substrat über das Grundiermittel haftender Siliconkautschuk entsteht, der eine Haftfestigkeit besitzt, die bei der Einwirkung von Siliconöl von hoher Temperatur beständig gegen Abnahme ist.

## Revendications

1. Une composition primaire d'accrochage constituée essentiellement de:

A) 100 parties en poids d'une résine d'organopolysiloxane ayant une formule de maille moyenne:

$$R_a(R'O)_bSiO_{\frac{4-a-b}{2}}$$

où R est un radical monovalent alcoyle, alcoyle halogéné, vinyle, allyle, cyanoalcoyle ou phényle, au moins 5% des radicaux R étant des radicaux phényle, R' est un atome d'hydrogène ou un radical alcoyle, a vaut de 0,90 à 1,8 et b a une valeur telle que la quantité de R'O soit supérieure à 0,01% en poids et au maximum de 20% en poids par rapport au poids de la résine,

B) 20 à 400 parties en poids d'un trialcoxysilane de la formule générale:

$$R^2Si(OR^3)_3$$

ou de son produit de condensation par hydrolyse partielle, dans laquelle $R^2$ est un radical aliphatique insaturé monovalent vinyle, allyle, ou acryloxyalcoyle, et $R^3$ est un radical alcoyle de 1 à 10 atomes de carbone,

C) 2 à 100 parties en poids d'un titanate organique, et

D) un solvant organique.

2. Une composition primaire selon la revendication 1, qui comprend, en outre,

E) 20 à 200 parties en poids d'un tétraalcoxysilane de la formule générale:

$$Si(OR^4)_4$$

ou de son produit de condensation par hydrolyse partielle, dans laquelle $R^4$ est un radical alcoyle en $C_1$ à $C_4$.

3. Une composition primaire selon l'une des revendications 1 ou 2, dans laquelle $R^2$ est un radical acryloxyalcoyle de la formule générale:

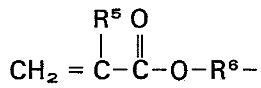

où $R^5$ est un atome d'hydrogène ou un radical méthyle et $R^6$ est un radical alcoylène.

4. Une composition primaire selon la revendication 3, dans laquelle $R^3$ est un radical méthyle, $R^5$ un radical méthyle et $R^6$ un radical propylène.

5. Une composition primaire selon l'une quelconque des revendications 1 à 4, dans laquelle les radicaux R de la résine d'organopolysiloxane de (A) sont constitués à raison d'au moins 5% par des radicaux phényle, le restant étant constitué de radicaux méthyle, a vaut de 1,1 à 1,6, R' est l'hydrogène, et b a une valeur telle que la quantité de R'O soit de 1 à 10% en poids, (B) est constitué de 25 à 350 parties en poids d'un trialcoxysilane dans lequel $R^3$ est un radical alcoyle de 1 à 3 atomes de carbone.

6. Une composition primaire selon la revendication 5, dans laquelle les radicaux R de la résine d'organopolysiloxane de (A) sont constitués à raison de 10 à 70% par des radicaux phényle, le restant étant constitué de radicaux méthyle, et b a une valeur telle que la quantité de R'O soit de 1 à 5% en poids, (B) est constitué de 150 à 250 parties en poids d'un trialcoxysilane dans lequel $R^3$ est un radical méthyle, $R^5$ un radical méthyle, et $R^6$ un radical propylène, (C) est constitué de 5 à 50 parties en poids d'un titanate de tétraalcoyle, et le solvant organique de (D) est présent à raison de 200 à 600 parties en poids.

7. Une composition primaire selon la revendication 6, dans laquelle le titanate de tétraalcoyle de (C) est du titanate de tétrabutyle, et le solvant organique est du toluène.

8. Une composition primaire selon la revendication 5, qui comprend, en outre, (E) 20 à 100 parties en poids d'un tétraalcoxysilane de la formule générale:

$$Si(OR^4)_4$$

où $R^4$ es un radical alcoyle de 1 à 3 atomes de carbone.

9. Un procédé pour faire adhérer du caoutchouc de silicone à un substrat, qui comprend:

I) le revêtement du substrat avec une composition primaire d'accrochage constituée essentiellement de (A) 100 parties en poids d'une résine d'organopolysiloxane ayant une formule de maille moyenne:

$$R_a(R'O)_bSiO_{\frac{4-a-b}{2}}$$

où R est un radical monovalent alcoyle, alcoyle halogéné, vinyle, allyle, cyanoalcoyle ou phényle, au moins 5% des radicaux R étant des radicaux phényle, R' est un atome d'hydrogène ou un radical alcoyle, a vaut de 0,90 à 1,8, et b a une valeur telle que la quantité de R'O soit supérieure à 0,01% en poids et au maximum de 20% en poids, (B) 20 à 400 parties en poids d'un trialcoxysilane de la formule générale:

$$R^2Si(OR^3)_3$$

ou de son produit de condensation par hydrolyse partielle, dans laquelle $R^2$ est un radical aliphatique insaturé monovalent vinyle, allyle ou acryloxyalcoyle, et $R^3$ est un radical alcoyle de 1 à 10 atomes de carbone, (C) 2 à 100 parties en poids d'un titanate organique, et (D) un solvant organique,

II) l'élimination du solvant organique pour au moins former une matière semi-solide, de manière à obtenir une surface de substrat apprêtée, puis

III) l'application, à la surface de substrat apprêtée, d'une composition qui durcit en un caoutchouc de silicone par chauffage, de manière à former un matériau composite, et

IV) le chauffage du matériau composite pour durcir la composition, de manière à obtenir un caoutchouc de silicone adhérent au substrat par l'intermédiaire de la couche primaire avec une force d'adhésion résistant à la diminution lors d'une exposition à de l'huile de silicone à haute température.